# EUROPEAN PATENT SPECIFICATION

(11) **EP 3 121 678 B1**
(45) Date of publication and mention of the grant of the patent: **14.04.2021**
(21) Application number: 15764057.4
(22) Date of filing: 02.03.2015
(51) Int. Cl.: G05D 11/02, G05D 7/00, G01F 3/00, G01F 15/00, G05D 7/06, D06F 39/02, G01F 1/00

(54) **DEVICE FOR MEASURING THE FLOW OF AN INCOMPRESSIBLE FLUID, HAVING PROPELLING MEANS**
VORRICHTUNG ZUR MESSUNG DES DURCHFLUSSES EINER NICHT KOMPRIMIERBAREN FLÜSSIGKEIT MIT ANTRIEBSMITTELN
DISPOSITIF DE MESURE DU DÉBIT D'UN FLUIDE INCOMPRESSIBLE AVEC UN MOYEN DE CIRCULATION

(30) Priority: 17.03.2014 ES 201430362
(43) Date of publication of application: 25.01.2017
(73) Proprietor: Aurep Dos, S.L., 08205 Sabadell, Barcelona (ES)
(72) Inventor: ERTA CARRERA, Jose, E-08201 Sabadell (Barcelona) (ES)
(74) Representative: Durán-Corretjer, S.L.P.
(86) International application number: PCT/ES2015/070147
(87) International publication number: WO 2015/140370

(56) References cited:
- ES-A1- 2 381 949
- US-A- 3 397 576
- US-A- 5 105 851
- US-A- 6 098 646
- US-A1- 2002 017 320
- US-A1- 2013 220 025
- US-B1- 6 234 030

## Description

The present invention relates to a device for measuring the flow rate of a non-compressible fluid.

More particularly the present invention relates to a device that can be applied especially advantageously for measuring the flow rate of a non-compressible fluid in a hydraulic circuit comprising another transfer fluid that is also non-compressible, for example water.

This is the case, for example, in laundry devices, in which at least one fluid, and in some cases more than one, for example a detergent and a softener, are metered into a hydraulic circuit conveying water.

In these cases, correct measurement of the flow rate of the metered fluid is important. To do this the installation of a flow meter for each fluid to be metered, or of a single flow meter, is required. If various fluids with different rheological features pass through the single flow meter, compensation factors must be used according to the properties of the fluid but, given that the features of the fluid are highly variable within a characteristic range, this would entail a high degree of measurement inaccuracy, or else entail having expensive equipment for measuring the properties of the fluids to be metered. Another alternative is that disclosed in Spanish patent specification ES2381949 consisting of a system for metering at least one substance comprising at least one inlet for fluid to be metered and one inlet for displacement fluid (transfer fluid), both giving access to a reservoir having an outlet which in turn gives access to a circuit portion (in particular, a bypass) in which only the displacement or transfer fluid circulates. Said part of the circuit has an access valve and a flow meter. In this device, the flow rate of the fluid to be metered is measured indirectly, by measuring the flow rate of the transfer fluid displaced by the fluid to be injected at its inlet into the reservoir.

The above-mentioned document ES2381949 discloses two options for impelling fluids; in particular the installation, upstream of the inlet into the metering system described above, of impeller pumps for each of the different non-compressible fluids, or alternatively suction at the outlet of the system. Both suggestions have flaws. The installation of impeller pumps upstream of the inlet into the system requires a pump for each fluid, and the installation of suction at the outlet creates operational problems associated with a large suction path and the fact that the pump system has to be suitable for all the fluids.

US 6 098 646 discloses a dispensing apparatus wherein a pump is located at the exit of a mixing apparatus, after mix of the fluids.

In the above-mentioned measurement and impeller system, an object of the present invention is to improve the problems associated with the impulsion.

According to the present invention, said object is achieved, in particular, by means of a system as defined in claim 1.

This means that the pump works only with transfer fluid, which is less chemically aggressive, and works by impulsion at least for some portions of the circuit.

The present invention also includes certain embodiments of the circuit that make it possible to exploit additional advantages of the novel arrangement to which the invention relates.

The invention is based on utilising the fact that when a non-compressible body is introduced into a container containing a first non-compressible fluid, this fluid is displaced. In this way the carrier fluid is pumped, indirectly transmitting said impulse to the fluid to be metered so as to prevent the pump from coming into contact with the fluid to be metered, which is generally more aggressive on the mechanical components of the pump.

According to an example not part of the invention, the pump can be used throughout the metering process, or solely for part of the process, for example during the measurement of the transfer fluid displaced upstream of the fluid to be metered leaves the system. In this latter case, either an external pressure source can be used for the impulsion in the remaining phases, for example the pressure of the transfer fluid at the inlet into the system (for example, mains water), or a second pump.

According to one aspect of the present invention, said portion of the circuit in which only the displacement or transfer fluid circulates is designed as a bypass at the outlet of the reservoir, the pump being located in said bypass, preferably upstream of the access valve to the flow meter.

According to another aspect of the present invention, said outlet from the reservoir gives direct access to the pump, the access valve and the flow meter, there being a bypass between the outlet from the reservoir and an intermediate point between the outlet from the pump and the set consisting of the flow meter and the access valve, and a second bypass between the inlet of transfer fluid to the system and a point upstream of the pump, the system having an additional outlet for the fluid to be metered that is independent of the above-mentioned reservoir and has a specific valve. Preferably, said additional outlet is configured as a branch located upstream of the inlet into the reservoir, such that the fluid to be metered travels towards the second outlet in the opposite direction from that of its inlet into the reservoir.

In this embodiment, the fluid to be metered enters the reservoir through suction by the pump and leaves the reservoir impelled by the transfer fluid, which is in turn impelled by the same pump. The various bypasses and valves of the system are actuated accordingly, depending on the phase of the metering procedure: measuring, ensuring that the fluid to be metered enters the reservoir, and conveying the fluid to be metered to its corresponding outlet from the system.

To better understand the invention, some drawings of an embodiment of the present invention are attached by way of explanatory but non-restrictive example.
Fig. 1 shows a diagram of a first embodiment according to the present invention.
Fig. 2 to 5 show a diagram of a second embodiment of the subject matter of the present invention, in three of its operating phases.

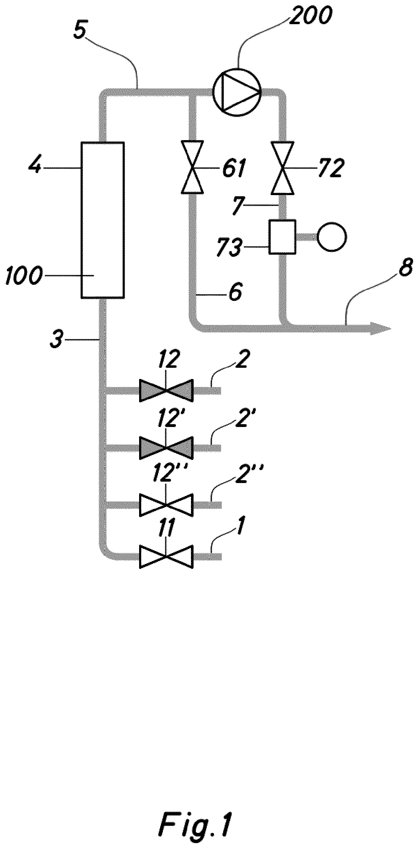

Fig. 1 shows an example of a first embodiment of the system according to the present invention consisting of a hydraulic circuit that can be applied in laundry. In this case the system consists of a modification to the device shown in the document ES2381949.

The system in Fig. 1 comprises a first inlet (1) for transfer fluid, such as water, an inlet (2) for a second fluid, such as a detergent solution, and a further two inlets (2') and (2") for two other fluids (for example, softeners). Each inlet has its own inlet valve (11), (12), (12') and (12") to open/close the passage for the corresponding non-compressible fluid.

Each of the inlets leads to a pipe (3) connected to the inlet of a receiving vessel (4) in which the fluid is stored.

The receiving vessel in this example has an outlet pipe (5) that branches. A first outlet valve (61) is positioned in the first branch (6), while a second outlet valve (72) is positioned in the second branch (7). Downstream of the second outlet valve (72) there is a flow meter (73). The two branches (6), (7) merge into the same pipe (8) feeding into a hydraulic circuit. Although this has not been shown in the figures, one or two non-return valves can be positioned in each of the branches (6), (7), close to the pipe (8) feeding the hydraulic circuit.

Characteristically, the system has a pump (200) downstream of the branch (7) of the circuit in which only the transfer fluid circulates.

Although Fig. 1 represents the outlet from the reservoir (4) in its upper portion, in an especially preferred embodiment the outlet from the reservoir (4) can be located in the lower portion thereof, while the inlet is located in the upper portion. As a result, gravity assists the outflow of fluid to be metered. This can prove important where the transfer fluid is less dense than the fluid to be metered. For its part, the embodiment shown in Fig. 1 is more suitable when the transfer fluid is denser than the fluid to be metered, since it is thus possible to improve the effective volume of the reservoir (4) and to reduce the fluid mix volume. In case the reservoir (4) is arranged horizontally or in the shape of a coil or other pattern of pipe, arranging the inlets or outlets of the reservoir with gravity or against gravity does not produce any particular advantage.

Fig. 1 shows the circuit in a rest state. In said state, the circuit is full of transfer liquid (100) and there is no flow. There could also be a flow of transfer fluid (100) such as water.

In the active state the product or products, i.e. the second and third non-compressible fluids (fluids to be metered), are introduced into the circuit in sequence, upstream of the receiving vessel (4). In this case, the impulsion would preferably come from the suction produced by the pump (200) during the process of measuring the displaced transfer fluid.

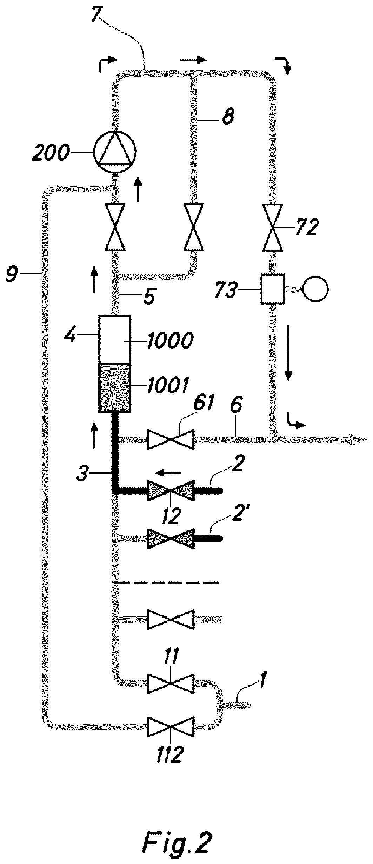

Fig. 2, 3, 4 and 5 show a diagram of a second embodiment according to the present invention, in which four operating moments have been shown. In the figures, components that are the same as or similar to those in Fig. 1 have been shown with the same numerals and will therefore not be explained in depth.

In this embodiment, the outlet from the reservoir (4) gives direct access to the pump (200), the access valve (72) and the flow meter (73), there being a bypass (8) between the outlet from the reservoir and an intermediate point between the outlet from the pump (200) and the set consisting of the access valve (72) and the flow meter (73). There is also a second bypass (9) between the inlet (1) of the transfer fluid into the system and a point upstream of the pump (200), the opening of which is controlled by the valve (112). Furthermore, the system has a second additional outlet (6) for the fluid to be metered, which is independent of the above-mentioned outlet and has a specific valve (61), the outlet (5) from the reservoir (4) and the additional outlet (6) being joined together downstream of the flow meter (73). In the case shown, said additional outlet (6) is located upstream of the inlet into the reservoir, such that the fluid to be metered travels towards the second outlet (6) in the opposite direction from that of its inlet into the reservoir (4). More specifically, the second outlet (6) is configured as a branch off the inlet tube (3).

Fig. 2 shows the measurement phase. The directions of flow have been represented here by arrows. The transfer fluid (1000) is impelled by the pump (200) and the fluid to be metered (1001) enters the system. The flow meter (73) measures the fluid to be metered indirectly, by measuring the flow of transfer fluid (1000).

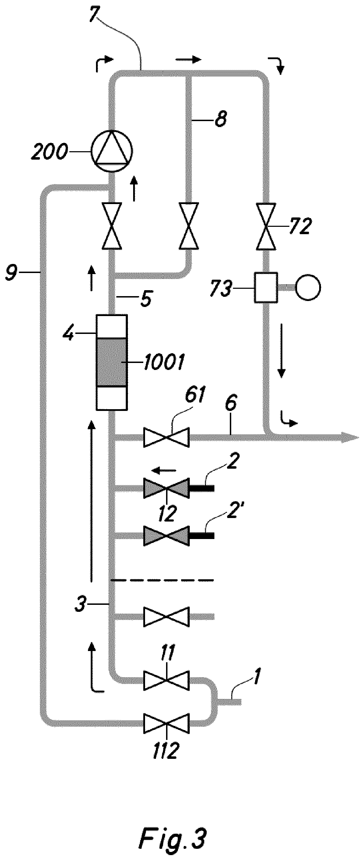

Fig. 3 shows a post-measurement phase, in which the inlet valve (12) for fluid to be metered (1001) has shut and the transfer fluid valve (11) has re-opened. The pump continues operating. The object of this phase is to ensure that all the fluid to be metered is introduced into the reservoir (4). The directions of circulation have been marked with arrows.

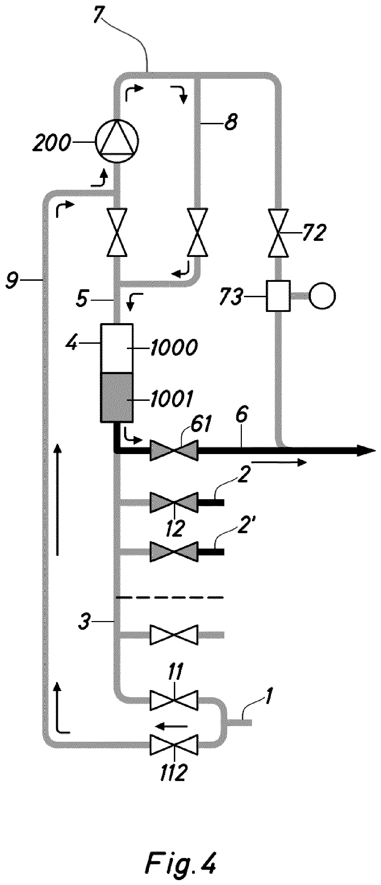

Fig. 4 shows a subsequent phase of transport or metering; the first and second bypasses (8), (9) are opened by actuating the corresponding valves (such as the valve (112)). In this case, the pump (200) is used for impelling. The fluid to be metered (1001) leaves the system through the second outlet (6). The directions of circulation have been marked with arrows.

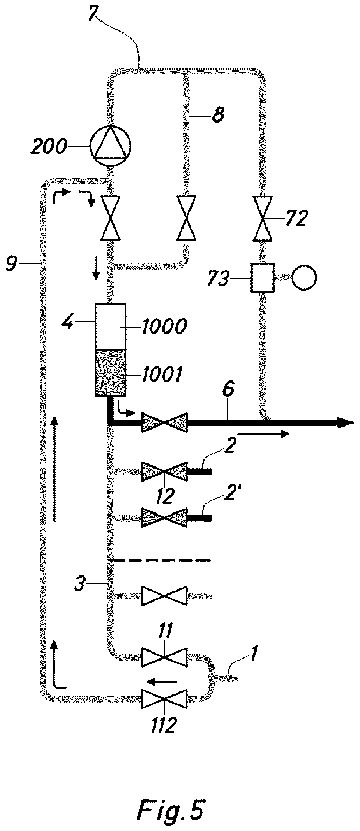

Fig. 5 shows another phase of transport or metering that can be either an alternative to that in Fig. 4 or a subsequent phase. In this case, the impulse does not come from the pump (200), and has to come from outside the circuit (pressure of transfer fluid (1000), external pump at the inlet or outlet of the circuit). The directions of circulation have been marked between arrows.

It should be noted that, in the various embodiments, by using suitable processes (such as those described) only low-cost transfer fluid circulates via the pump (200), since it does not have to be compatible with the various chemical elements.

The elements in the figures can be arranged as in the drawings, with the inlets/outlets in a configuration with gravity, against gravity, or horizontal, as required.

Although the invention has been described in relation to preferred embodiments, these should not be considered to restrict the invention, which is to be defined by the following claims.

## Claims

1. System for metering at least one substance, which is a non-compressible fluid, into a hydraulic circuit comprising another transfer fluid that is also non-compressible, said system comprising at least one inlet (2,2',2") for said fluid to be metered, a circuit and one inlet (1) for said transfer fluid, both giving access to a reservoir (4) having an outlet (5) from the reservoir (4) which in turn gives access to a circuit portion in which only the transfer fluid circulates, said circuit portion having at least one access valve (72) and one flow meter (73), the fluid to be metered being measured by measuring the transfer fluid displaced by the fluid to be impelled at its inlet into the system, said circuit portion having an outlet being joined together with an outlet for the fluid to be metered downstream of the flow meter (73) for feeding into said hydraulic circuit, the system also having a pump (200) such that it works by suction for the upstream of the pump (200), and by impulsion downstream, **characterised in that** the pump (200) is located in said circuit portion in which only the transfer fluid circulates.

2. System according to claim 1, **characterised in that** said portion of the system is configured as a bypass at the outlet of the reservoir (4), the pump (200) being located in said bypass, preferably upstream of the access valve (72) to the flow meter (73).

3. System according to claim 1, **characterised in that** said outlet (5) from the reservoir (4) gives direct access to the pump (200), the access valve (72) and the flow meter (73), there being a bypass (8) between the outlet (5) from the reservoir (4) and an intermediate point between the outlet from the pump (200) and the set consisting of the access valve (72) and the flow meter (73), and a second bypass (9) between the inlet (1) of transfer fluid into the system and a point upstream of the pump (200), the system having an additional outlet (6) for the fluid to be metered that is independent of the above-mentioned outlet (5) from the reservoir (4) and has a specific valve (61), said outlets (5,6) from the reservoir (4) being joined together downstream of the flow meter (73).

4. System according to claim 3, **characterised in that** said additional outlet (6) for the fluid is configured as a branch upstream of said inlet into the reservoir (4), such that the fluid to be metered (1001) located in the reservoir (4) leaves said reservoir (4) through the second outlet in an opposite direction from that of its inlet into the reservoir (4).

## Patentansprüche

1. System zum Dosieren mindestens einer Substanz, die ein nicht komprimierbares Fluid ist, in einen hydraulischen Kreislauf, der ein weiteres Übertragungsfluid umfasst, das ebenfalls nicht komprimierbar ist, wobei das System zumindest einen Einlass (2, 2', 2") für das zu dosierende Fluid, einen Kreislauf und einen Einlass (1) für das Übertragungsfluid umfasst, die beide Zugang zu einem Sammelbehälter (4) bieten, der einen Auslass (5) aus dem Sammelbehälter (4) aufweist, welcher wiederum Zugang bietet zu einem Kreislaufabschnitt, in dem nur das Übertragungsfluid zirkuliert, wobei der Kreislaufabschnitt zumindest ein Zugangsventil (72) und einen Durchflussmesser (73) aufweist, wobei das zu dosierende Fluid durch Messen des Übertragungsfluides gemessen wird, das durch das anzutreibende Fluid an seinem Einlass in das System verdrängt wird, wobei der Kreislaufabschnitt einen Auslass aufweist, der mit einem Auslass für das zu dosierende Fluid dem Durchflussmesser (73) nachgelagert zum Einspeisen in den hydraulischen Kreislauf verbunden ist, wobei das System auch eine Pumpe (200) aufweist, so dass sie der Pumpe (200) vorgelagert durch Ansaugen und nachgelagert durch Antreiben arbeitet, **dadurch gekennzeichnet, dass** die Pumpe (200) in dem Kreislaufabschnitt angeordnet ist, in dem nur das Übertragungsfluid zirkuliert.

2. System nach Anspruch 1, **dadurch gekennzeichnet, dass** der Abschnitt des Systems an dem Auslass des Sammelbehälters (4) als Nebenstrom eingerichtet ist, wobei die Pumpe (200) in dem Nebenstrom angeordnet ist, vorzugsweise dem Zugangsventil (72) zu dem Durchflussmesser (73) vorgelagert.

3. System nach Anspruch 1, **dadurch gekennzeichnet, dass** der Auslass (5) aus dem Sammelbehälter (4) einen direkten Zugang zu der Pumpe (200), dem Zugangsventil (72) und dem Durchflussmesser (73) bietet, wobei es einen Nebenstrom (8) gibt zwischen dem Auslass (5) aus dem Sammelbehälter (4) und einem Zwischenpunkt zwischen dem Auslass aus der Pumpe (200) und dem Satz bestehend aus dem Zugangsventil (72) und dem Durchflussmesser (73), und einen zweiten Nebenstrom (9) zwischen dem Einlass (1) des Übertragungsfluides in das System und einem der Pumpe (200) vorgelagerten Punkt, wobei das System einen zusätzlichen Auslass (6) für das zu dosierende Fluid aufweist, der unabhängig von dem oben erwähnten Auslass (5) aus dem Sammelbehälter (4) ist und ein spezifisches Ventil (61) aufweist, wobei die Auslässe (5, 6) aus dem Sammelbehälter (4) dem Durchflussmesser (73) nachgelagert miteinander verbunden sind.

4. System nach Anspruch 3, **dadurch gekennzeichnet, dass** der zusätzliche Auslass (6) für das Fluid als eine dem Einlass in den Sammelbehälter (4) vorgelagerte Abzweigung eingerichtet ist, so dass das zu dosierende Fluid (1001), das sich in dem Sammelbehälter (4) befindet, den Sammelbehälter (4) durch den zweiten Auslass in einer Richtung verlässt, die derjenigen seines Einlasses in den Sammelbehälter (4) entgegengesetzt ist.

## Revendications

1. Système pour le dosage d'au moins une substance, qui est un fluide non compressible, dans un circuit hydraulique comprenant un autre fluide transfert qui est également non-compressible, ledit système comprenant au moins une première entrée (2, 2', 2") pour ledit fluide à doser, un circuit et une entrée (1) pour ledit fluide transfert, l'une et l'autre donnant accès à un réservoir (4) ayant une sortie (5) depuis le réservoir (4) qui à son tour donne accès à une portion de circuit dans laquelle seul le fluide transfert circule, ladite portion de circuit ayant au moins une vanne d'accès (72) et un doseur de flux (73), le fluide à doser étant mesuré par la mesure du fluide transfert déplacé par le fluide à pousser à son entrée dans le système, ladite portion de circuit ayant une sortie qui est reliée ensemble avec une sortie pour le fluide à doser en aval du doseur de flux (73) pour l'introduction dans ledit circuit hydraulique, le système ayant également une pompe (200) telle qu'elle travaille par succion pour l'amont de la pompe (200), et par refoulement en aval, **caractérisé en ce que** la pompe (200) est disposée dans ladite portion de circuit dans laquelle seul le fluide transfert circule.

2. Système selon la revendication 1, **caractérisé en ce que** ladite portion du système est configurée sous forme d'une dérivation à la sortie du réservoir (4), la pompe (200) étant logée dans ladite dérivation, de préférence en amont de la vanne d'accès (72) au doseur de flux (73).

3. Système selon la revendication 1, **caractérisé en ce que** ladite sortie (5) depuis le réservoir (4) donne accès directe à la pompe (200), à la vanne d'accès (72) et au doseur de flux (73), une dérivation (8) étant prévue entre la sortie (5) depuis le réservoir (4) et un point intermédiaire entre la sortie de la pompe (200) et l'ensemble consistant dans la vanne d'accès (72) et le doseur de flux (73), et une seconde dérivation (9) étant prévue entre l'entrée (1) de fluide transfert dans le système est un point en amont de la pompe (200), le système ayant une sortie additionnelle (6) pour le fluide à doser qui est indépendante de la sortie (5) mentionnée ci-dessus depuis le réservoir (4) et qui a une vanne spécifique (61), lesdites sorties (5, 6) depuis le réservoir (4) étant reliées ensemble en aval du doseur de flux (73).

4. Système selon la revendication 3, **caractérisé en ce que** ladite sortie additionnelle (6) pour le fluide est configurée sous forme d'une branche en amont de ladite entrée dans le réservoir (4), de telle sorte que le fluide à doser (1001) logé dans le réservoir (4) quitte ledit réservoir (4) à travers la seconde sortie dans une direction opposée à celle de son entrée dans le réservoir (4).
